# EUROPEAN PATENT SPECIFICATION

(11) **EP 2 504 552 B1**
(45) Date of publication and mention of the grant of the patent: **30.12.2020**
(21) Application number: 10784423.5
(22) Date of filing: 24.11.2010
(51) Int. Cl.: F02K 1/09, F02K 1/72

(54) **VARIABLE AREA FAN NOZZLE WITH A BEARING TRACK**
VARIABLE LÜFTERDÜSE MIT LAGERSCHIENE
RAIL DE SUPPORT POUR BUSE DE SOUFFLANTE À SECTION VARIABLE

(30) Priority: 24.11.2009 US 624525
(43) Date of publication of application: 03.10.2012
(73) Proprietor: United Technologies Corporation, Farmington, CT 06032 (US)
(72) Inventor: SCHWARK, JR., Fred W., Simsbury, Connecticut 06070 (US); ATASSI, Oliver V., Longmeadow, Massachusetts 01106 (US); OWEN, William D., Windsor, Connecticut 06095 (US)
(74) Representative: Dehns
(86) International application number: PCT/US2010/057974
(87) International publication number: WO 2011/066365

(56) References cited:
- WO-A2-2009/029401
- US-A- 5 778 659
- US-A- 5 806 302

## Description

### BACKGROUND

The present disclosure relates to a gas turbine engine, and more particularly to a turbofan engine having a variable area fan nozzle (VAFN) with a VAFN bearing track that increases a flutter margin.

Gas turbine engines which have an engine cycle modulated with a variable area fan nozzle (VAFN) provide a smaller fan exit nozzle during cruise conditions and a larger fan exit nozzle during take-off and landing conditions.

A design requirement for the VAFN is to maintain structural integrity throughout the flight envelope of the aircraft. Due to flow turbulence and mechanical vibration, the VAFN may be subject to both tonal and broadband aerodynamic loads that cause the nozzle to elastically deflect from a mean position.

WO2009/029401 discloses a nacelle assembly having the features of the preamble of claim 1. US-A-5806302 discloses a further nacelle assembly.

### SUMMARY

A nacelle assembly according to one aspect of the invention is set forth in claim 1.

A further nacelle assembly according to the invention is set forth in claim 3.

### BRIEF DESCRIPTION OF THE DRAWINGS

Various features will become apparent to those skilled in the art from the following detailed description of the disclosed non-limiting embodiment. The drawings that accompany the detailed description can be briefly described as follows:
Figure 1 is a general schematic partial fragmentary view of an exemplary gas turbine engine embodiment for use with the present invention;
Figure 2 is a rear view of the engine;
Figure 3A is a perspective view of the engine with the VAFN in a closed position;
Figure 3B is a sectional side view of the VAFN in a closed position;
Figure 4A is a perspective view of the engine with the VAFN in an open position;
Figure 4B is a sectional side view of the VAFN in an open position; and
Figure 5 is a partial side view of the VAFN;
Figure 6 is a perspective view of one track assembly upon which a thrust reverser assembly and a VAFN cowl are positioned;
Figure 7 is a perspective view of the track assembly of Figure 6 with the thrust reverser assembly and the VAFN cowl in a closed position;
Figure 8 is a perspective view of the track assembly of Figure 6 with the thrust reverser assembly and the VAFN cowl in a translated position;
Figure 9 is a sectional view of a male section of a second track slider and a female section of a first track slider illustrating a bearing assembly according to one non-limiting embodiment; and
Figure 10 is a sectional view of a male section of a second track slider and a female section of a first track slider illustrating a bearing assembly according to another non-limiting embodiment.

### DETAILED DESCRIPTION

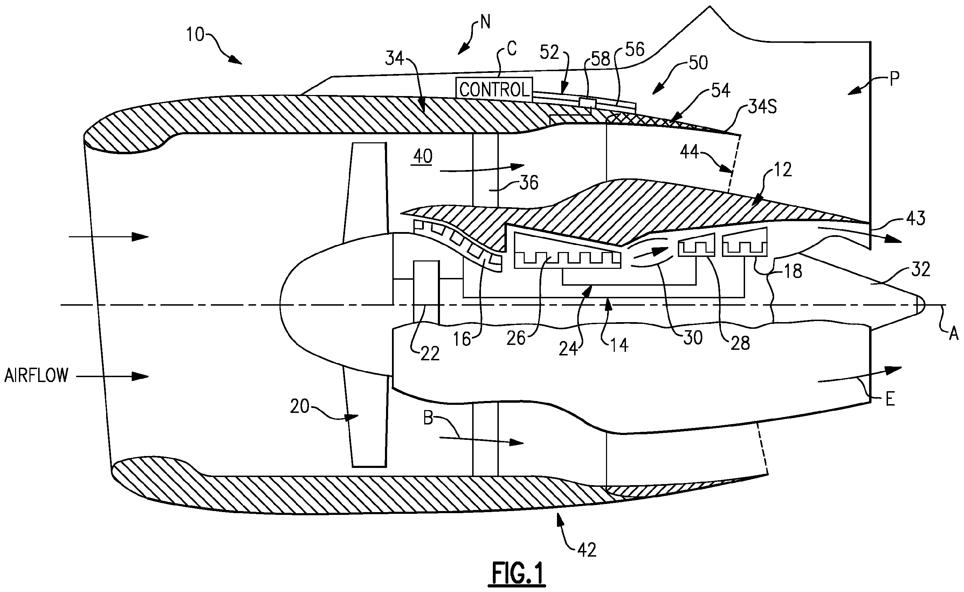

Figure 1 illustrates a general partial fragmentary schematic view of a gas turbofan engine 10 suspended from an engine pylon P within an engine nacelle assembly N. The turbofan engine 10 includes a core engine within a core nacelle 12 that houses a low spool 14 and high spool 24. The low spool 14 includes a low pressure compressor 16 and low pressure turbine 18. The low spool 14 also drives a fan section 20 through a gear train 22. The high spool 24 includes a high pressure compressor 26 and high pressure turbine 28. A combustor 30 is arranged between the high pressure compressor 26 and high pressure turbine 28. The low and high spools 14, 24 rotate about an engine axis of rotation A.

The engine 10 in one non-limiting embodiment is a high-bypass geared architecture aircraft engine with a bypass ratio greater than ten (10:1), a turbofan diameter significantly larger than that of the low pressure compressor 16, and the low pressure turbine 18 with a pressure ratio greater than 5:1. The gear train 22 may be an epicycle gear train such as a planetary gear system or other gear system with a gear reduction ratio of greater than 2.5:1. It should be understood, however, that the above parameters are only exemplary of one non-limiting embodiment of a geared architecture engine and that this disclosure is applicable to other gas turbine engines including direct drive turbofans.

Airflow enters a fan nacelle 34 which at least partially surrounds the core nacelle 12. The fan section 20 communicates airflow into the core nacelle 12 to power the low pressure compressor 16 and the high pressure compressor 26. Core airflow compressed by the low pressure compressor 16 and the high pressure compressor 26 is mixed with the fuel in the combustor 30 and expanded over the high pressure turbine 28 and low pressure turbine 18. The turbines 28, 18 are coupled for rotation with respective spools 24, 14 to rotationally drive the compressors 26, 16 and through the gear train 22, the fan section 20 in response to the expansion. A core engine exhaust E exits the core nacelle 12 through a core nozzle 43 defined between the core nacelle 12 and a tail cone 32.

The core nacelle 12 is supported within the fan nacelle 34 by circumferentially spaced structures 36 often referred to as Fan Exit Guide Vanes (FEGVs). A bypass flow path 40 is defined between the core nacelle 12 and the fan nacelle 34. The engine 10 generates a high bypass flow arrangement with a bypass ratio in which approximately eighty percent of the airflow which enters the fan nacelle 34 becomes bypass flow B. The bypass flow B communicates through the generally annular bypass flow path 40 and is discharged from the engine 10 through a variable area fan nozzle (VAFN) 42 which defines a nozzle exit area 44 between the fan nacelle 34 and the core nacelle 12 at a fan nacelle end segment 34S of the fan nacelle 34 downstream of the fan section 20.

Thrust is a function of density, velocity, and area. One or more of these parameters can be manipulated to vary the amount and direction of thrust provided by the bypass flow B. The VAFN 42 operates to effectively vary the area of the fan nozzle exit area 44 to selectively adjust the mass flow of the bypass flow B in response to a controller C. Low pressure ratio turbofans are desirable for their high propulsive efficiency. However, low pressure ratio fans may be inherently susceptible to fan stability/flutter problems at low power and low flight speeds. The VAFN 42 allows the engine to change to a more favorable fan operating line at low power, avoiding the instability region and still provide the relatively smaller nozzle area necessary to obtain a high-efficiency fan operating line at cruise speeds.

A significant amount of thrust is provided by the bypass flow B due to the high bypass ratio. The fan section 20 of the engine 10 is designed for a particular flight condition -- typically cruise at 0.8M and 35,000 feet. As the fan blades within the fan section 20 are efficiently designed at a particular fixed stagger angle for an efficient cruise condition, the VAFN 42 is operated to effectively vary the fan nozzle exit area 44 to adjust fan bypass air flow such that the angle of attack or incidence on the fan blades is maintained close to the design incidence for efficient engine operation at other flight conditions, such as landing and takeoff to thus provide optimized engine operation over a range of flight conditions with respect to performance and other operational parameters such as noise levels.

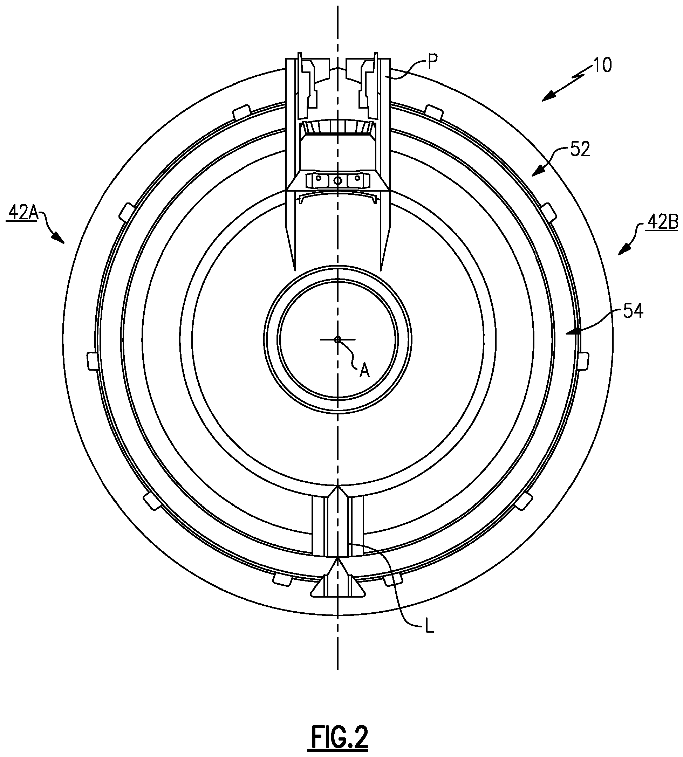

The VAFN 42 may be separated into at least two sectors 42A-42B (Figure 2) defined between the pylon P and a lower Bi-Fi splitter L which typically interconnects a larger diameter fan duct reverser cowl and a smaller diameter core cowl. It should be understood that although two segments are illustrated, any number of sectors may alternatively or additionally be provided.

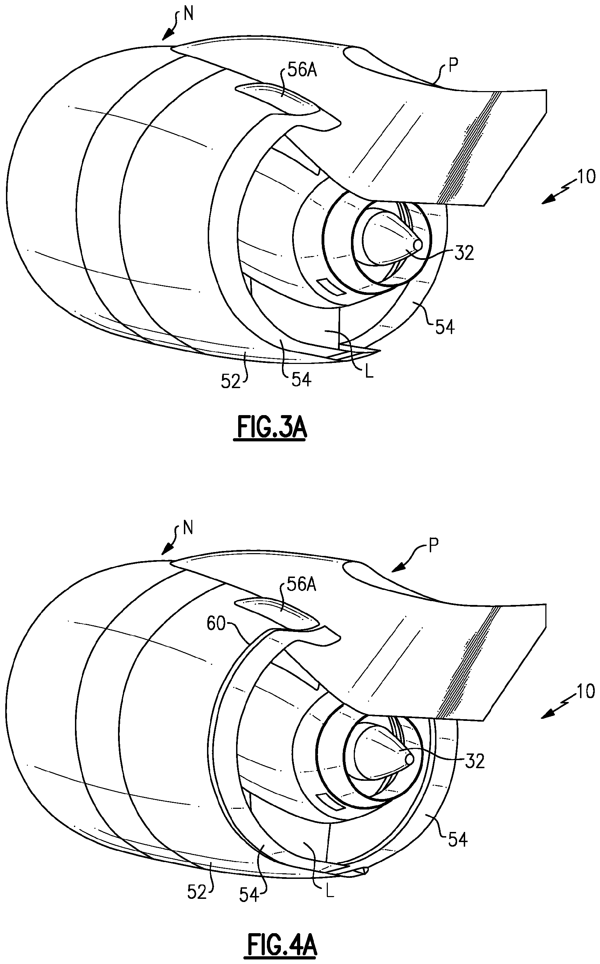

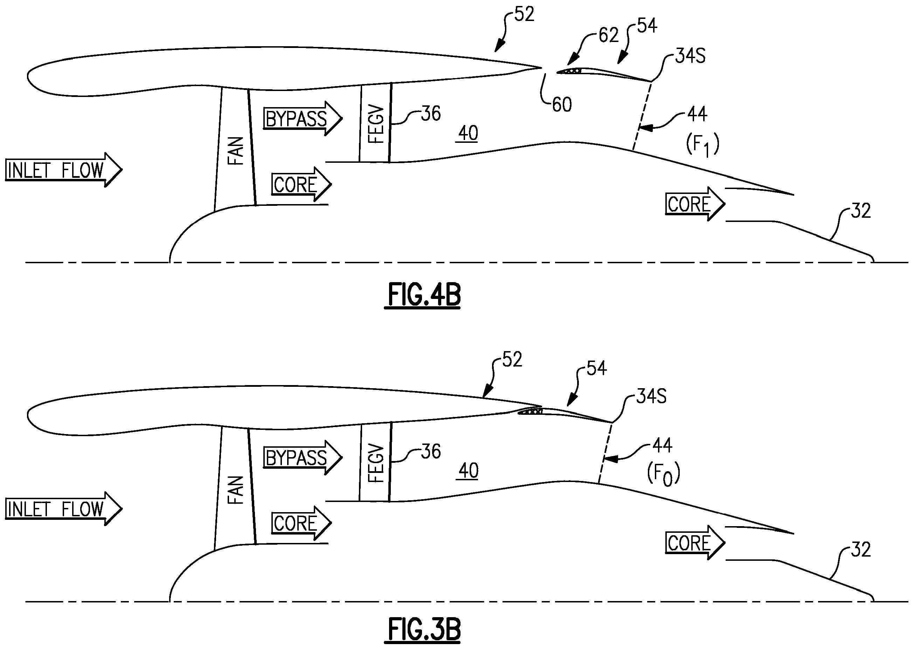

The VAFN 42 selectively defines an auxiliary port system 50 having a first fan nacelle section 52 that include a thrust reverser cowl and a second fan nacelle section 54 that includes a VAFN cowl movably mounted relative the first fan nacelle section 52. The second fan nacelle section 54 axially slides along the engine axis A relative the fixed first fan nacelle section 52 to change the effective area of the fan nozzle exit area 44. That is, as the stroke of the second fan nacelle section 54 varies, the leading edge of the second fan nacelle section 54 is either covered by the first fan nacelle section 52 (Figures 3A and 3B) or the leading edge is uncovered to define an auxiliary port 60 (Figures 4A and 4B).

The second fan nacelle section 54, in one non-limiting embodiment, slides along a track assembly 56A, 56B within each sectors 42A-42 (Figures 3A and 4A) in response to an actuator 58. The track assembly 56A, 56B may be located from the first fan nacelle section 52 adjacent the respective pylon P and the lower Bi-Fi splitter L.

The VAFN 42 changes the physical area and geometry of the bypass flow path 40 during particular flight conditions. The bypass flow B is effectively altered by sliding of the second fan nacelle section 54 relative the first fan nacelle section 52 between a closed position (Figures 3A and 3B) and an open position (Figures 4A and 4B). Movement of the second fan nacelle section 54 forward along the track assembly 56A, 56B toward the first fan nacelle section 52 closes the auxiliary port 60 between the second fan nacelle section 54 and the first fan nacelle section 52 to essentially provide a decrease in the fan nozzle exit area 44 toward exit area F0 (Figure 4A). Movement of the second fan nacelle section 54 aftward along the track assembly 56A, 56B away from the first fan nacelle section 52 opens the auxiliary port 60 between the second fan nacelle section 54 and the first fan nacelle section 52 to essentially provide an increased fan nozzle exit area 44 toward exit area F1 (Figure 4B). That is, exit area F1 with auxiliary port 60 (Figure 4B) is greater than exit area F0 (Figure 3B).

In operation, the VAFN 42 communicates with the controller C to move the second fan nacelle section 54 relative the first fan nacelle section 52 of the auxiliary port system 50 to effectively vary the area defined by the fan nozzle exit area 44. Various control systems including an engine controller or an aircraft flight control system may also be usable with the present invention. By adjusting the axial position of the entire periphery of the second fan nacelle section 54 in which all sectors are moved simultaneously, engine thrust and fuel economy are maximized during each flight regime by varying the fan nozzle exit area. By separately adjusting the sectors of the second fan nacelle section 54 to provide an asymmetrical fan nozzle exit area 44, engine bypass flow is selectively vectored to provide, for example only, trim balance, thrust controlled maneuvering, enhanced ground operations and short field performance.

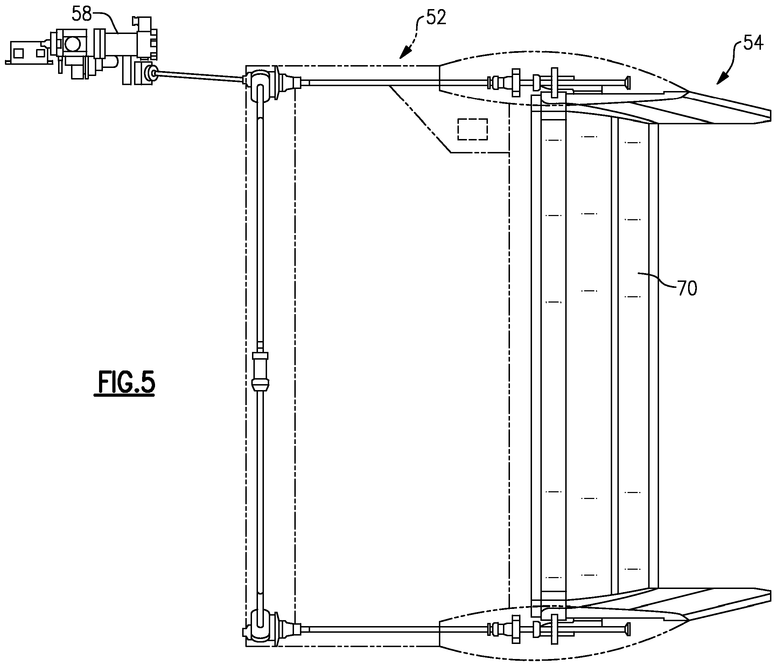

Referring to Figure 5, the second fan nacelle section 54 includes a first and second VAFN cowl 70 within each sector 42A-42B. Each VAFN cowl 70 is respectively supported by the track assembly 56A, 56B. Whereas each sector 42A-42B is essentially identical, only track assembly 56A will be described in detail herein.

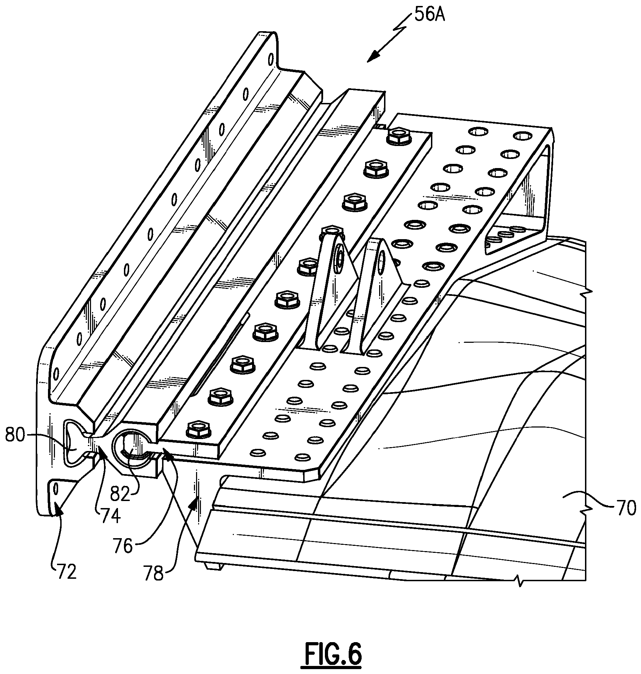

Referring to Figure 6, the track assembly 56A generally includes a hinge beam 72, a first track slider 74, a second track slider 76 and a VAFN cowl mount 78. The hinge beam 72 may be fixed to the first fan nacelle section 52, the engine pylon P, lower Bi-Fi splitter L or other fixed structure. The first track slider 74 slides relative the hinge beam 72 and the second track slider 76 slides relative the first track slider 74. The first track slider 74 generally supports a thrust reverse assembly and the second track slider 76 supports the VAFN cowl 70 such that the thrust reverse assembly and the VAFN cowl 70 may be operated in an independent manner.

The first track slider 74 defines a first interface 80 with the hinge beam 72 such as a dove-tail interface. The second track slider 76 defines a second interface 82 with the first track slider 74 such as a semi-cylindrical interface. In one non-limiting embodiment, the second interface 82 is more closely controlled than the first interface 80. It should be understood that various interfaces may alternatively be utilized.

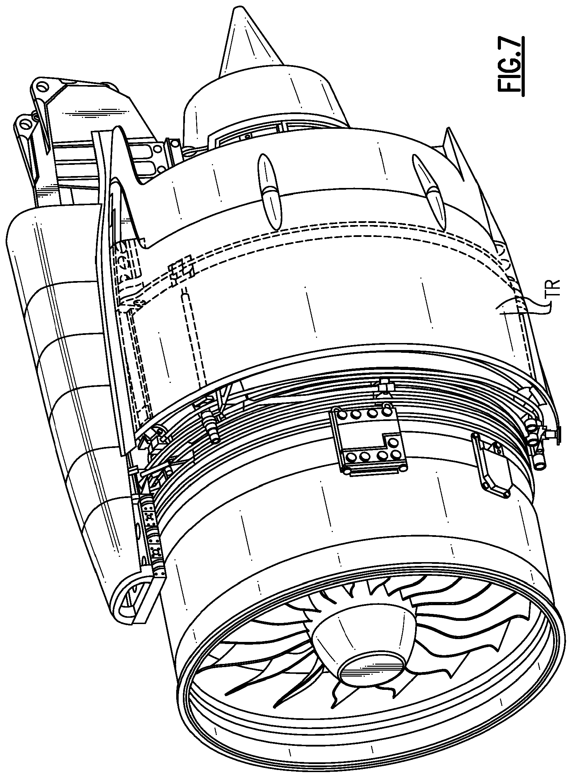

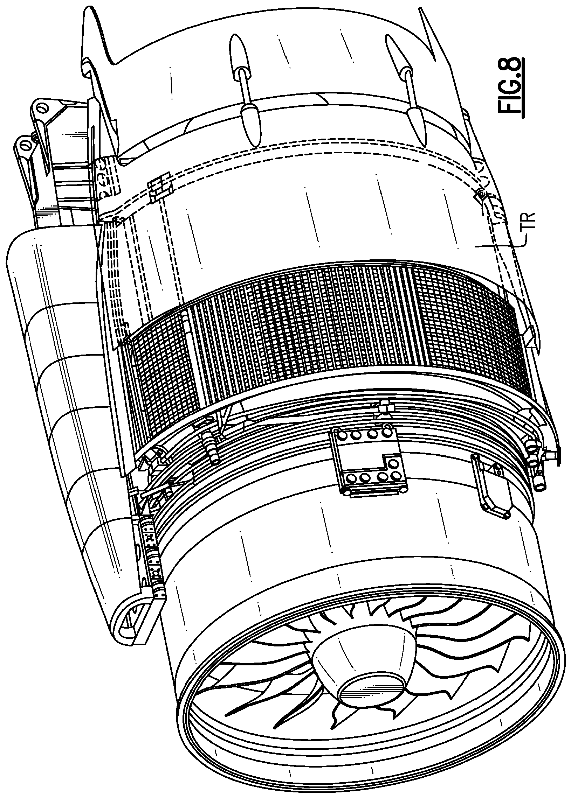

The second track slider 76 supports the VAFN cowl mount 78 which supports the VAFN cowl 70. The first track slider 74 generally supports the thrust reverse cowl assembly (TR) and the second track slider 76 supports the VAFN cowl 70 such that the thrust reverse cowl and the VAFN cowl 70 may be operated in an independent manner. The first track slider 74 generally supports the thrust reverse cowl assembly (TR) thereby defines the range of movement of the thrust reverse cowl assembly (TR) between the closed position (Figure 7) and an open position (Figure 8) generally along the engine axis A. The second track slider 76 thereby defines the range of movement of the VAFN cowl 70 between the closed position (Figure 7) and an open position (Figure 8) relative the thrust reverse cowl assembly (TR) generally along the engine axis A.

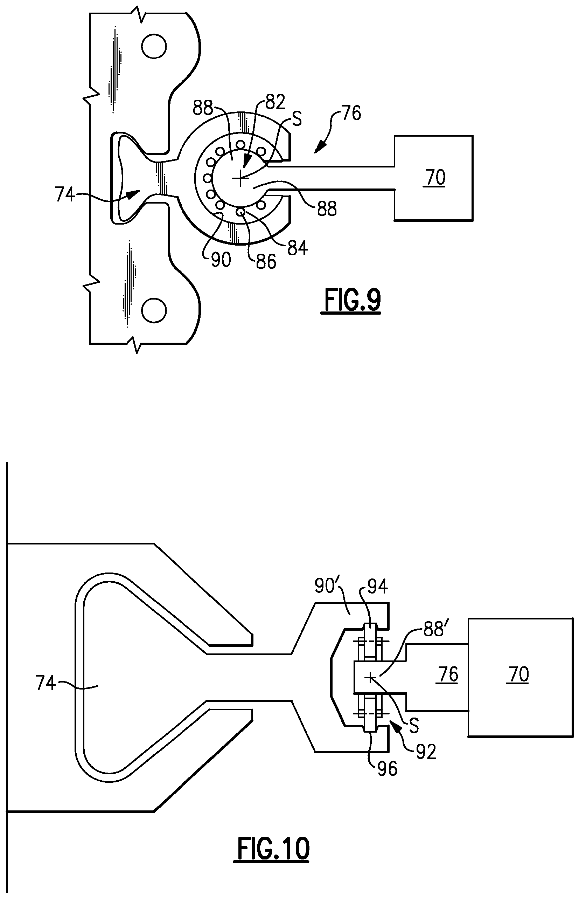

Referring to Figure 9, the second interface 82 includes a bearing assembly 84 that includes a multiple of ball bearings 86 between a male section 88 of the second track slider 76 and a female section 90 of the first track slider 74. The bearing assembly 84 may be mounted within the female section 90 of the first track slider 74 and support the multiple of ball bearings 86 arranged in rows spaced about the circumference of the male section 88 along axis S.

The male section 88 of the second track slider 76 interfaces with the female section 90 of the first track slider 74 upon the bearing assembly 84. The male section 88 also may rotate in a radial direction about axis S with respect to female section 90 such that under certain flow conditions the phasing between the unsteady aerodynamic loads and the displacement of the resonant modes of the structure are such that the net work of the fluid on the structure over an oscillation period is greater than zero. When this occurs, the amplitude of the deflections grows substantially over time resulting in high stress in the structure. This phenomenon is referred to as aeroelastic instability or flutter.

Applicant has determined that by closely controlling the tolerance between the male section 88 of the second track slider 76 with the female section 90 of the first track slider 74 through the bearing assembly 84, the aeroelastic instability or flutter of the VAFN cowl 70 is altered to thereby effectively increase the flutter margin. That is, the bearing assembly 84 facilitates low resistance movement of the VAFN cowl 70 along the axis S yet closely controls the rotational movement about axis S such that a fixed boundary condition is maintained in the radial direction about axis S to maintain the airfoil stiffness of the VAFN cowl 70 and advantageously effect the natural frequency and mode shape of the vibration thereof.

Referring to Figure 10, another non-limiting embodiment of the second interface 82 include includes a bearing assembly 92 between a male section 88' of the second track slider 76 and a female section 90' of the first track slider 74. The bearing assembly 92 may include a multiple of rollers 94 which roll generally parallel to axis S and are supported within a track 96 formed by the VAFN cowl 70. That is, the bearing assembly 92 facilitates low resistance movement of the VAFN cowl 70 along axis S while closely controlling the VAFN cowl 70 about axis S in a radial direction.

It should be understood that like reference numerals identify corresponding or similar elements throughout the several drawings. It should also be understood that although a particular component arrangement is disclosed in the illustrated embodiment, other arrangements will benefit herefrom.

Although particular step sequences are shown, described, and claimed, it should be understood that steps may be performed in any order, separated or combined unless otherwise indicated and will still benefit from the present disclosure.

The foregoing description is exemplary rather than defined by the limitations within. Various non-limiting embodiments are disclosed herein, however, one of ordinary skill in the art would recognize that various modifications and variations in light of the above teachings will fall within the scope of the appended claims. It is therefore to be understood that within the scope of the appended claims, the disclosure may be practiced other than as specifically described. For that reason the appended claims should be studied to determine true scope and content.

## Claims

1. A nacelle assembly (N) for a high bypass gas turbine engine (10) comprising:
a core nacelle (12) defined about an engine centerline axis (A);
a fan nacelle (34) mounted at least partially around said core nacelle (12) to define a fan bypass flow path (40); and
a variable area fan nozzle (42) in communication with said fan bypass flow path (40) and comprising:
a hinge beam (72);
a first track slider (74) movable relative to said hinge beam (72) along a first interface;
a second track slider (76) movable relative to said first track slider (74) along a second interface; and
a first fan nacelle section (52) and a second fan nacelle section (54), said second fan nacelle section (54) including a VAFN cowl (70) mounted to said second track slider (76), said hinge beam (72) being fixed to said first fan nacelle section (52);
said second fan nacelle section (54) being slidable axially along the engine axis (A) relative to said first fan nacelle section (52), the leading edge of the second nacelle section (54) being uncovered to define an auxiliary port (60) between said first fan nacelle section (52) and said second nacelle section (54) to vary a fan nozzle exit area and adjust fan bypass airflow;
**characterised in that**:
said second interface includes a bearing assembly (92) having a multiple of roller bearings (94).

2. The nacelle assembly as recited in claim 1, wherein said VAFN cowl (70) supports said second track slider (76) which receives said multiple of roller bearings (94).

3. A nacelle assembly (N) for a high bypass gas turbine engine (10) comprising:
a core nacelle (12) defined about an engine centerline axis (A);
a fan nacelle (34) mounted at least partially around said core nacelle (12) to define a fan bypass flow path (40); and
a variable area fan nozzle (42) in communication with said fan bypass flow path (40) and comprising:
a hinge beam (72);
a first track slider (74) movable relative to said hinge beam (72) along a first interface;
a second track slider (76) movable relative to said first track slider (74) along a second interface; and
a first fan nacelle section (52) and a second fan nacelle section (54), said second fan nacelle section (54) including a VAFN cowl (70) mounted to said second track slider (76), said hinge beam (72) being fixed to said first fan nacelle section (52);
said second fan nacelle section (54) being slidable axially along the engine axis (A) relative to said first fan nacelle section (52), the leading edge of the second nacelle section (54) being uncovered to define an auxiliary port (60) between said first fan nacelle section (52) and said second nacelle section (54) to vary a fan nozzle exit area and adjust fan bypass airflow;
wherein said second interface includes a male section (88) of said second track slider (76) and a female section (90) of said first track slider (74); **characterised in that**:
said second interface includes a bearing assembly (84), said bearing assembly being mounted between said male section (88) and said female section (90) and including a multiple of ball bearings arranged in rows spaced about the circumference of the male section (88).

4. The nacelle assembly as recited in claim 3, wherein said male section (88) is a semi-circle in cross section

5. The nacelle assembly as recited in any preceding claim, wherein said first track slider (74) supports a thrust reverser assembly (TR).

6. The nacelle assembly as recited in claim 5, wherein said first track slider (74) is independently movable relative said second track slider (76).

7. A gas turbine engine (10) comprising:
a core engine defined about an axis;
a gear system (22) driven by said core engine;
a turbofan (20) driven by said gear system (22) about said axis; and
a nacelle assembly (N) as recited in any preceding claim;
said core nacelle (12) of said nacelle assembly (N) defined at least partially about said core engine.

## Patentansprüche

1. Gondelbaugruppe (N) für ein Hochbypass-Gasturbinentriebwerk (10), die Folgendes umfasst:
eine Kerngondel (12), die um eine Triebwerksmittelachse (A) definiert ist;
eine Lüftergondel (34), die mindestens teilweise um die Kerngondel (12) montiert ist, um einen Lüfter-Bypass-Strömungsweg (40) zu definieren; und
eine Lüfterdüse (42) mit variabler Fläche, die in Kommunikation mit dem Lüfter-Bypass-Strömungsweg (40) steht und Folgendes umfasst:
einen Scharnierträger (72);
einen ersten Schienenschieber (74), der relativ zu dem Scharniertäger (72) entlang einer ersten Schnittstelle bewegbar ist;
einen zweiten Schienenschieber (76), der relativ zu dem ersten Schienenschieber (74) entlang einer zweiten Schnittstelle bewegbar ist; und
einen ersten Lüftergondelabschnitt (52) und einen zweiten Lüftergondelabschnitt (54), wobei der zweite Lüftergondelabschnitt (54) eine Verkleidung (70) der Lüfterdüse mit variabler Fläche (VAFN - variable area fan nozzle) beinhaltet, die an dem zweiten Schienenschieber (76) montiert ist, wobei der Scharniertäger (72) an dem ersten Lüftergondelabschnitt (52) befestigt ist;
wobei der zweite Lüftergondelabschnitt (54) axial entlang der Triebwerksachse (A) relativ zu dem ersten Lüftergondelabschnitt (52) verschiebbar ist, wobei die Vorderkante des zweiten Gondelabschnitts (54) freigelegt ist, um eine Hilfsöffnung (60) zwischen dem ersten Lüftergondelabschnitt (52) und dem zweiten Gondelabschnitt (54) zu definieren, um einen Lüfterdüsenausgangsbereich zu variieren und einen Lüfter-Bypass-Luftstrom anzupassen;
**dadurch gekennzeichnet, dass**:
die zweite Schnittstelle eine Lagergruppe (92) beinhaltet, die eine Vielzahl von Rollenlagern (94) aufweist.

2. Gondelbaugruppe nach Anspruch 1, wobei die Verkleidung (70) der Lüfterdüse mit variabler Fläche (VAFN) den zweiten Schienenschieber (76) abstützt, der die Vielzahl von Rollenlagern (94) empfängt.

3. Gondelbaugruppe (N) für ein Hochbypass-Gasturbinentriebwerk (10), die Folgendes umfasst:
eine Kerngondel (12), die um eine Triebwerksmittelachse (A) definiert ist;
eine Lüftergondel (34), die mindestens teilweise um die Kerngondel (12) montiert ist, um einen Lüfter-Bypass-Strömungsweg (40) zu definieren; und
eine Lüfterdüse (42) mit variabler Fläche, die in Kommunikation mit dem Lüfter-Bypass-Strömungsweg (40) steht und Folgendes umfasst:
einen Scharniertäger (72);
einen ersten Schienenschieber (74), der relativ zu dem Scharniertäger (72) entlang einer ersten Schnittstelle bewegbar ist;
einen zweiten Schienenschieber (76), der relativ zu dem ersten Schienenschieber (74) entlang einer zweiten Schnittstelle bewegbar ist; und
einen ersten Lüftergondelabschnitt (52) und einen zweiten Lüftergondelabschnitt (54), wobei der zweite Lüftergondelabschnitt (54) eine Verkleidung (70) der Lüfterdüse mit variabler Fläche (VAFN) beinhaltet, die an dem zweiten Schienenschieber (76) montiert ist, wobei der Scharniertäger (72) an dem ersten Lüftergondelabschnitt (52) befestigt ist;
wobei der zweite Lüftergondelabschnitt (54) axial entlang der Triebwerksachse (A) relativ zu dem ersten Lüftergondelabschnitt (52) verschiebbar ist, wobei die Vorderkante des zweiten Gondelabschnitts (54) freigelegt ist, um eine Hilfsöffnung (60) zwischen dem ersten Lüftergondelabschnitt (52) und dem zweiten Gondelabschnitt (54) zu definieren, um einen Lüfterdüsenausgangsbereich zu variieren und einen Lüfter-Bypass-Luftstrom anzupassen;
wobei die zweite Schnittstelle einen Steckabschnitt (88) des zweiten Schienenschiebers (76) und einen Aufnahmeabschnitt (90) des ersten Schienenschiebers (74) beinhaltet;
**dadurch gekennzeichnet, dass**:
die zweite Schnittstelle eine Lagerbaugruppe (84) beinhaltet, wobei die Lagerbaugruppe zwischen dem Steckabschnitt (88) und dem Aufnahmeabschnitt (90) montiert ist und eine Vielzahl von Kugellagern beinhaltet, die in Reihen um den Umfang des Steckabschnitts (88) beabstandet angeordnet ist.

4. Gondelbaugruppe nach Anspruch 3, wobei der Steckabschnitt (88) ein Halbkreis im Querschnitt ist.

5. Gondelbaugruppe nach einem der vorhergehenden Ansprüche, wobei der erste Schienenschieber (74) eine Schubumkehrbaugruppe (TR) abstützt.

6. Gondelbaugruppe nach Anspruch 5, wobei der erste Schienenschieber (74) unabhängig relativ zu dem zweiten Schienenschieber (76) bewegbar ist.

7. Gasturbinentriebwerk (10), das Folgendes umfasst:
ein Kerntriebwerk, das um eine Achse definiert ist;
ein Getriebesystem (22), das von dem Kerntriebwerk angetrieben ist;
ein Mantelstromtriebwerk (20), das von dem Getriebesystem (22) um die Achse angetrieben ist; und
eine Gondelbaugruppe (N) nach einem der vorhergehenden Ansprüche;
die Kerngondel (12) der Gondelbaugruppe (N), die mindestens teilweise um das Kerntriebwerk definiert ist.

## Revendications

1. Ensemble de nacelle (N) pour un moteur à turbine à gaz à haut taux de dilution (10) comprenant :
une nacelle centrale (12) définie autour d'un axe central de moteur (A) ;
une nacelle de soufflante (34) montée au moins partiellement autour de ladite nacelle centrale (12) pour définir un trajet d'écoulement de dérivation de soufflante (40) ; et
une buse de soufflante à section variable (42) en communication avec ledit trajet d'écoulement de dérivation de soufflante (40) et comprenant :
un support de coulisse (72) ;
une première coulisse de rail (74) mobile par rapport audit support de coulisse (72) le long d'une première interface ;
une seconde coulisse de rail (76) mobile par rapport à ladite première coulisse de rail (74) le long d'une seconde interface ; et
une première section de nacelle de soufflante (52) et une seconde section de nacelle de soufflante (54), ladite seconde section de nacelle de soufflante (54) comportant un capot VAFN (70) monté sur ladite seconde coulisse de rail (76), ledit support de coulisse (72) étant fixé à ladite première section de nacelle de soufflante (52) ;
ladite seconde section de nacelle de soufflante (54) pouvant coulisser axialement le long de l'axe de moteur (A) par rapport à ladite première section de nacelle de soufflante (52), le bord avant de la seconde section de nacelle (54) étant découvert pour définir un orifice auxiliaire (60) entre ladite première section de nacelle de soufflante (52) et ladite seconde section de nacelle (54) pour faire varier une section de sortie de buse de soufflante et ajuster le débit d'air de dérivation de soufflante ;
**caractérisé en ce que** :
ladite seconde interface comporte un ensemble de support (92) ayant de multiples supports à rouleaux (94).

2. Ensemble de nacelle selon la revendication 1, dans lequel ledit capot VAFN (70) supporte ladite seconde coulisse de rail (76) qui reçoit lesdits multiples supports à rouleaux (94).

3. Ensemble de nacelle (N) pour un moteur à turbine à gaz à haut taux de dilution (10) comprenant :
une nacelle centrale (12) définie autour d'un axe central de moteur (A) ;
une nacelle de soufflante (34) montée au moins partiellement autour de ladite nacelle centrale (12) pour définir un trajet d'écoulement de dérivation de soufflante (40) ; et
une buse de soufflante à section variable (42) en communication avec ledit trajet d'écoulement de dérivation de soufflante (40) et comprenant :
un support de coulisse (72) ;
une première coulisse de rail (74) mobile par rapport audit support de coulisse (72) le long d'une première interface ;
une seconde coulisse de rail (76) mobile par rapport à ladite première coulisse de rail (74) le long d'une seconde interface ; et
une première section de nacelle de soufflante (52) et une seconde section de nacelle de soufflante (54), ladite seconde section de nacelle de soufflante (54) comportant un capot VAFN (70) monté sur ladite seconde coulisse de rail (76), ledit support de coulisse (72) étant fixé à ladite première section de nacelle de soufflante (52) ;
ladite seconde section de nacelle de soufflante (54) pouvant coulisser axialement le long de l'axe de moteur (A) par rapport à ladite première section de nacelle de soufflante (52), le bord avant de la seconde section de nacelle (54) étant découvert pour définir un orifice auxiliaire (60) entre ladite première section de nacelle de soufflante (52) et ladite seconde section de nacelle (54) pour faire varier une section de sortie de buse de soufflante et ajuster le débit d'air de dérivation de soufflante ;
dans lequel ladite seconde interface comporte une section mâle (88) de ladite seconde coulisse de rail (76) et une section femelle (90) de ladite première coulisse de rail (74) ;
**caractérisé en ce que** :
ladite seconde interface comporte un ensemble de support (84), ledit ensemble de support étant monté entre ladite section mâle (88) et ladite section femelle (90) et comportant de multiples supports à billes disposés en rangées espacées autour de la circonférence de la section mâle (88).

4. Ensemble de nacelle selon la revendication 3, dans lequel ladite section mâle (88) est un demi-cercle en coupe transversale.

5. Ensemble de nacelle selon une quelconque revendication précédente, dans lequel ladite première coulisse de rail (74) supporte un ensemble d'inverseur de poussée (TR).

6. Ensemble de nacelle selon la revendication 5, dans lequel ladite première coulisse de rail (74) est indépendamment mobile par rapport à ladite seconde coulisse de rail (76).

7. Moteur à turbine à gaz (10) comprenant :
un moteur central défini autour d'un axe ;
un système d'engrenage (22) entraîné par ledit moteur central ;
un turboréacteur (20) entraîné par ledit système d'engrenage (22) autour dudit axe ; et
un ensemble de nacelle (N) selon une quelconque revendication précédente ;
ladite nacelle centrale (12) dudit ensemble de nacelle (N) étant définie au moins partiellement autour dudit moteur central.
